# EUROPÄISCHE PATENTSCHRIFT

(11) **EP 3 917 304 B1**
(45) Veröffentlichungstag und Bekanntmachung des Hinweises auf die Patenterteilung: **19.07.2023**
(21) Anmeldenummer: 20702255.9
(22) Anmeldetag: 24.01.2020
(51) Int. Cl.: A01C 15/04, A01C 7/08

(54) **MATERIALEINLEITSCHLEUSE FÜR EINE VERTEILMASCHINE UND VERTEILMASCHINE**
MATERIAL INTRODUCTION SLUICE FOR A DISTRIBUTION MACHINE, AND DISTRIBUTION MACHINE
SAS D'INTRODUCTION DE MATIÈRE POUR UN ÉPANDEUR ET ÉPANDEUR

(30) Priorität: 30.01.2019 DE 102019102256
(43) Veröffentlichungstag der Anmeldung: 08.12.2021
(73) Patentinhaber: Amazonen-Werke H. Dreyer SE & Co. KG, 49205 Hasbergen (DE)
(72) Erfinder: WIEN, Thomas, 28816 Stuhr (DE); MERTENS, Daniel, 26121 Oldenburg (DE); LUEBBEN, Jan-Eike, 26188 Edewecht (DE)
(86) Internationale Anmeldenummer: PCT/EP2020/051722
(87) Internationale Veröffentlichungsnummer: WO 2020/156938

(56) Entgegenhaltungen:
- DE-A1- 2 629 278
- JP-A- H11 168 928
- US-A1- 2015 166 269

## Beschreibung

Die Erfindung betrifft eine Materialeinleitschleuse für eine Verteilmaschine gemäß dem Oberbegriff des Patentanspruches 1, sowie eine Verteilmaschine mit einer Materialeinleitschleuse nach Anspruch 10.

Eine derartige Materialeinleitschleuse ist in US 9 546 051 B2 beschrieben. Diese Materialeinleitschleuse ist für eine Verteilmaschine, wie beispielsweise eine Sämaschine, Einzelkornsämaschine und/oder Düngerverteilmaschine, vorgesehen und dient der pneumatischen Förderung von granularem Material in zumindest einer sich der Materialeinleitschleuse anschließenden Förderleitung. Die Materialeinleitschleuse umfasst einen Lufteinlass, welcher mit einem Gebläse verbunden dazu dient, einen pneumatischen Förderstrom an ein Materialförderelement bereitzustellen. Ferner umfasst die Materialeinleitschleuse ein Materialeinführelement, welches der Zufuhr des zu fördernden granularem Materials zwischen Materialförderelement und der Förderleitung dient. Durch den mittels des Materialförderelements eingeleiteten pneumatischen Förderstrom wird das so in die Materialeinleitschleuse zugebrachte granulare Material in der anschließenden Förderleitung gefördert.

Bei dem zu fördernden granularen Material handelt es sich beispielsweise um bruchempfindliche und/oder hygroskopische Dünger oder zuweilen gebeiztes Saatgut. Solche Materialien sind häufig transportbedingt mit Staub behaftet, bzw. können teilweise durch Belastung zu solchem zerfallen.

Nachteilig bei dieser Materialeinleitschleuse ist, dass vorgenannte Staubpartikel und mit dem Material beförderte Schmutzteilchen insbesondere in dem Materialeinführelement dazu neigen sich an den Wandungen abzusetzen. Im unteren Teil des Materialeinführelementes mischt sich der pneumatische Förderstrom aus dem Materialförderelement mit dem zugebrachten Material, so dass sich der Staub in erhöhtem Maße von dem Material löst bzw. das Material in gesteigertem Umfang mit den Wandungen kollidiert und so beim Aufprall an der Wandung mechanisch belastet wird, was das Stauben anregt. Dies ist besonders nachteilig, da auf diese Weise die Verschmutzung im Materialeinführelement weiter ansteigt. Die sich an den Wandungen absetzenden Partikel und Teilchen aus Staub und Schmutz verringern den erreichbaren Durchsatz der Materialeinleitschleuse und können in Form von sogenannten Anbackungen sogar zur vollständigen Verstopfung der Materialeinleitschleuse führen. Um solche Fehlfunktionen zu vermeiden ist es bisher für den Benutzer notwendig die Materialeinleitschleuse regelmäßig zu demontieren, um diese zu säubern. Solche Säuberungsmaßnahmen senken die erreichbare Flächenleistung der Maschine an der die Materialeinleitschleuse angeordnet ist. Die US 2015/166269 A1 und DE 26 29 278 A1 schlagen Vorrichtungen bzw. Verfahren zur Vermeidung von einer Verstopfung einer Materialeinleitschleuse einer Verteilermaschine vor. U

Die Aufgabe der vorliegenden Erfindung besteht somit darin, eine Materialeinleitschleuse mit einem Materialeinführelement zu schaffen, in welchem die Belastung durch Verschmutzung reduziert ist.

Diese Aufgabe wird erfindungsgemäß dadurch gelöst, dass das Materialeinführelement zumindest ein mit dem Lufteinlass verbundenes Spüldüsenelement, welches einen das Materialeinführelement von innen ummantelnden Luftfilm erzeugt, umfasst, dass das Spüldüsenelement mittels des Luftfilms dazu eingerichtet ist, den Kontakt zwischen granularem Material und Materialeinführelement zu reduzieren.

Die Erfindung macht sich die Erkenntnis zunutze, dass durch zumindest annährend flächendeckendes Überströmen der inneren Wandungen des Materialeinführelementes mittels eines Luftfilms, sprich über das Spüldüsenelement das Materialeinführelement von innen mit dem Luftfilm zu ummanteln, sowohl das granulare Material als auch Staub- und/oder Schmutzpartikel auf dem Luftfilm in die Förderleitung getragen werden. Die vom pneumatischen Förderstrom mitgerissenen Körner des granularen Materials kommen aufgrund des Luftfilms, welcher sozusagen eine schützende Trennschicht bildet, zumindest annährend nicht mehr in Kontakt mit den Wandungen des Materialeinführelementes, so dass die Belastung durch Verschmutzung in vorteilhafter Weise weiter gesenkt ist. Infolge dieser Maßnahme wird nicht nur das Anhaften bereits vorhandener Staub- und/oder Schmutzpartikel effektiv reduziert, sondern auch das Entstehen weiterer Verschmutzung nahezu verhindert.

Ferner wird durch das Einblasen des Luftfilms über das Spüldüsenelement im Bereich des Materialeinführelements der lokale Taupunkt angehoben. Folglich werden in diesem Bereich weniger Wasserpartikel aus der Luft abgeschieden. Insbesondere hygroskopische Dünger aber auch Staub und Schmutz im Allgemeinen neigen dadurch in verringertem Maße dazu an den Wandungen anzuhaften und Anbackungen zu bilden.

In einer vorteilhaften Weiterbildung der Materialeinleitschleuse ist vorgesehen, dass der durchströmte Öffnungsquerschnitt des zumindest einen Spüldüsenelements, den durchströmten Querschnitt des Materialförderelementes, vorzugsweise um annährend die Hälfte, unterschreitet. Infolge dieser Maßnahme ist zumindest annährend sichergestellt, dass die am Lufteinlass zur Verfügung stehende Luftmenge in geeigneter Weise zwischen dem Materialförderelement und dem Spüldüsenelement aufgeteilt ist. Der größere Anteil, vorzugsweise das Doppelte im Vergleich zu Spüldüsenelement, der Luftmenge steht dem Materialförderelement zur Verfügung, um granulares Material in der Förderleitung zu fördern. Die übrige Luftmenge ist dem Spüldüsenelement zur Verfügung gestellt, dessen gegenüber dem Materialförderelement verringerter Öffnungsquerschnitt zudem die Tragfähigkeit des Luftfilms steigert. Dies ist bedingt durch die anhand des geringeren Öffnungsquerschnitts bei ansonsten gleichen Bedingungen gesteigerte Strömungsgeschwindigkeit.

Um eine möglichst flächendeckende Ausprägung des Luftfilms zu erreichen, ist in einer weiteren vorteilhaften Weiterbildung der Erfindung vorgesehen, dass der durchgeströmte Öffnungsquerschnitt des zumindest einen Spüldüsenelementes eine quer zur Durchströmungsrichtung lang gestreckte, insbesondere nahezu rechteckige, Form aufweist, so dass der Luftfilm als Flachstrahl ausgebildet ist. Infolge dieser Maßnahme ist das Spüldüsenelement dazu eingerichtet, einen Luftfilm auszubilden, welcher quer zur Strömungsrichtung lang gestreckt und flach ausgebildet ist und sich so besonders gut an die Wandungen des Materialeinführelementes anlegt.

Die Materialeinleitschleuse ist ferner vorteilhaft dadurch weitergebildet, dass das Materialeinführelement zumindest zwei annährend aufrechte gegenüberliegende Seitenwände umfasst, dass das zumindest eine Spüldüsenelement sich zwischen den zumindest zwei Seitenwänden erstreckt und an diese nahezu anschließt, so dass sich der Luftfilm an die Seitenwände anlegt. Diese Weiterbildung zeichnet sich durch eine besonders flächendeckende Ausbildung des Luftfilms insbesondere an den Seitenwänden aus. Ein solches Strömungsprofil weist eine gesteigerte Tragkraft des Luftfilms auf und schützt die Wandungen in weiter verbesserter Weise vor Verschmutzung.

In einer weiteren vorteilhaften Weiterbildung der Materialeinleitschleuse ist das zumindest eine Spüldüsenelement gebildet durch zumindest zwei Segmentdüsen. Vorzugsweise sind die Segmentdüsen die Form und Abmessungen betreffend identisch ausgeführt. Infolge dieser Maßnahme ist das Spüldüsenelement dazu eingerichtet einen mehrschichtigen Luftfilm zu erzeugen, nämlich eine Schicht pro Segmentdüse. Eine besonders flächendeckende Ummantelung des Materialeinführelementes ist so in erleichterter Weise ermöglicht.

In einer besonders vorteilhaften Weiterbildung der Materialeinleitschleuse sind die zumindest zwei Segmentdüsen zumindest annährend nebeneinander angeordnet. Infolge dieser Maßnahme wird eine besonders flächendeckende Ausprägung des Luftfilms erreicht, wobei ein besonders homogenes Profil der zusammengesetzten Strömung entsteht. Dies hat zum Vorteil, dass weniger Verluste auftreten und die Tragkraft des Luftfilms gesteigert ist.

In einer weiteren vorteilhaften Weiterbildung der Erfindung ist vorgesehen, dass die zumindest zwei Segmentdüsen in unterschiedlichem Abstand zum Materialförderelement angeordnet sind. Die Erzeugung des Luftfilms mittels des durch die zumindest zwei Segmentdüsen gebildeten Spüldüsenelementes ist somit weniger stark beeinflusst durch am Materialförderelement eventuell auftretende Strömungsschwankungen. Durch den Versatz der zumindest zwei Segmentdüsen in Durchströmungsrichtung zum Materialförderelement ist die zuverlässige Ausprägung eines tragfähigen Luftfilms verbessert.

Die Materialeinleitschleuse ist ferner vorteilhaft dadurch weitergebildet, dass die Materialeinleitschleuse als Injektorvorrichtung ausgeführt ist, wobei das Materialförderelement als Treibdüse, welche den pneumatischen Förderstrom in einen zumindest annährend in die Förderleitung gerichteten Förderstrahl wandelt und so eine Saugwirkung in dem Materialeinführelement erzeugt, ausgebildet ist. Diese Weiterbildung macht sich den Venturi-Effekt zunutze, welcher bewirkt, dass in Durchströmungsrichtung hinter dem als Treibdüse ausgeführten Materialförderelement, also im Materialeinführelement, eine Saugwirkung aufgrund der gestiegenen Strömungsgeschwindigkeit und dem daraus resultierenden Differenzdruck entsteht. Vorteilhaft ist hierbei, dass von dem Materialeinführelement zugebrachtes granulares Material in den so entstehenden Förderstrahl eingesogen und in verbesserter Weise in der Förderleitung gefördert wird. Der Kontakt zwischen Materialeinführelement und granularem Material wird so weiter reduziert, was der Vermeidung von Verschmutzungen zuträglich ist.

In einer weiteren vorteilhaften Weiterbildung der Materialeinleitschleuse umfasst diese einen Diffusorhals, wobei der Diffusorhals zwischen Materialeinführelement und der Förderleitung angeordnet ist, so dass das granulare Material in der Förderleitung zusätzlich beschleunigt wird. Der Diffusorhals kann als Querschnittsverjüngung in Durchströmungsrichtung vor der Förderleitung ausgebildet sein und erzeugt so einen die Pumpwirkung im Materialeinführelement verstärkenden Druckanstieg. Vorteilhaft ist hierbei, dass das granulare Material auf diese Weise in gesteigertem Maße in den pneumatischen Förderstrom eingesogen und in der Förderleitung beschleunigt wird.

Die der Erfindung zugrunde liegende Aufgabe wird ferner durch eine Verteilmaschine gelöst, welche einen, vorzugsweise lang gestreckten, Vorratsbehälter für granulares Material und quer zur Fahrtrichtung nebeneinander angeordnete Bodenbearbeitungswerkzeuge zur Ablage von granularem Material in mehreren Reihen, wobei dem Vorratsbehälter für jede Reihe zumindest ein Dosierorgan zur Abgabe von granularem Material in geregelten Mengen in eine das zumindest eine Dosierorgan mit den Bodenbearbeitungswerkzeugen Schüttgut leitend verbindende Förderleitung zugeordnet ist, umfasst und zwischen dem Dosierorgan und der Förderleitung jeder Reihe eine Materialeinleitschleuse zur pneumatischen Förderung des granularen Materials in der Förderleitung angeordnet ist, wobei der Materialeinleitschleuse jeder Reihe ein von einem Gebläse erzeugter pneumatischer Förderstrom zumindest teilweise zuleitbar ist, wobei die Materialeinleitschleuse nach zumindest einer der vorstehend beschriebenen Ausführungsformen ausgebildet ist. Hinsichtlich der Vorteile und Modifikationen der erfindungsgemäßen Verteilmaschine wird auf die Vorteile und Modifikationen der erfindungsgemäßen Materialeinleitschleuse verwiesen.

Bei Ausführung der Verteilmaschine als Einzelkornsämaschine mit mehreren quer zur Fahrtrichtung nebeneinander angeordneten Säaggregaten, wobei jedes Säaggregat einen separaten Vorratsbehälter für Mikrogranulat mit zugeordnetem Dosierorgan aufweist, kann die Materialeinleitschleuse nach zumindest einer der vorstehend beschriebenen Ausführungsformen zwischen dem Dosierorgan eines jeden Säaggregates und der daran anschließenden Förderleitung angeordnet sein.

Weitere Einzelheiten der Erfindung sind der Beispielsbeschreibung und den Zeichnungen zu entnehmen. Die Zeichnungen zeigen
- Fig.1: eine hinter einem Ackerschlepper angehangene Verteilmaschine mit einem lang gestreckten Vorratsbehälter in perspektivischer Ansicht,
- Fig.2: der Vorratsbehälter in von der Verteilmaschine demontiertem Zustand in Schnittansicht von der Seite,
- Fig.3: eine Materialeinleitschleuse in perspektivischer Einzelansicht, und
- Fig.4: die Materialeinleitschleuse gemäß Fig.3 in Schnittansicht.

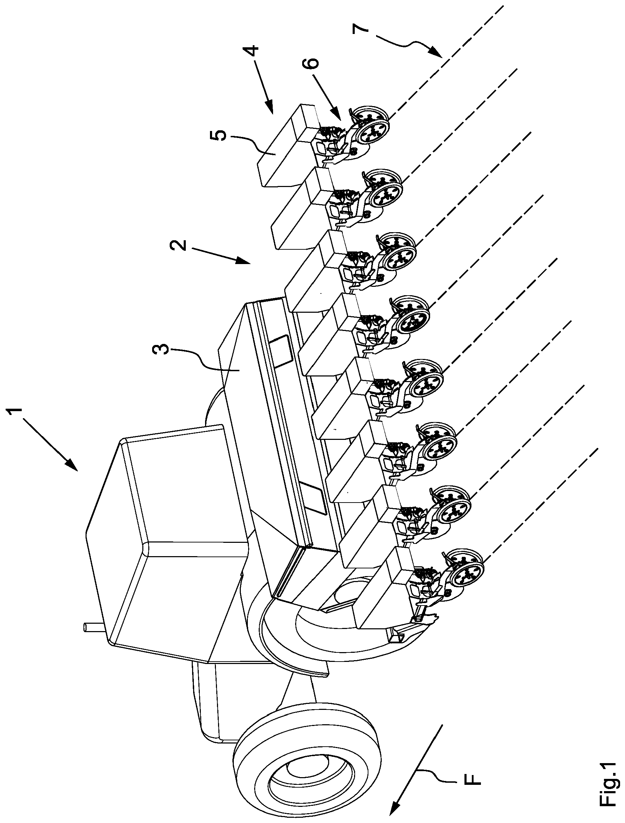

Eine hinter einem Ackerschlepper 1 angehangene als Einzelkornsämaschine 2 ausgeführte Verteilmaschine ist in Fig.1 zu sehen. Die Einzelkornsämaschine 2 umfasst einen quer zu Fahrtrichtung F lang gestreckten Vorratsbehälter, welcher als Düngerbehälter 3 dient, und ferner ebenfalls quer zur Fahrtrichtung F an einem Balken angeordnete Säaggregate 4. Die Säaggregate 4 weisen jeweils einen Saatgutbehälter 5 und eine durch den Saatgutbehälter 5 verdeckte Vereinzelungseinrichtung zur vereinzelten Abgabe von Saatgut, sowie Bodenbearbeitungswerkzeuge 6 auf. Durch die quer zur Fahrtrichtung F äquidistante Anordnung der Säaggregate 4 am Balken wird ein landwirtschaftliches Feld in mehreren sogenannten Reihen 7 bearbeitet, wobei die Anzahl der Reihen 7 in diesem Fall der Anzahl der Säaggregate 4 entspricht.

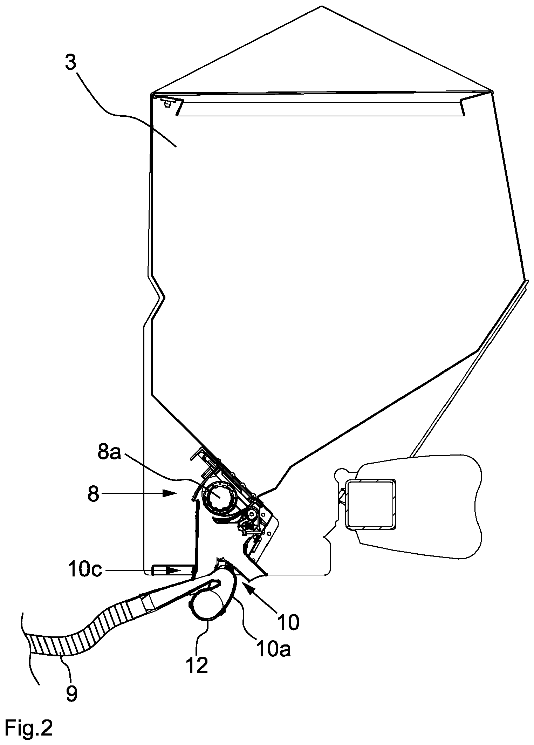

Dem Düngerbehälter 3 ist an seinem unteren in Fahrtrichtung F hinteren Ende jeweils ein Dosierorgan 8 pro Reihe 7 bzw. Säaggregat 4 zugeordnet, wie Fig.2 zeigt. Das Dosierorgan 8 ist mit einem rotierend antreibbaren Dosierrad 8a ausgestattet und so zur Abgabe von granularem Material, in diesem Fall Dünger aus dem Düngerbehälter 3, in geregelten Mengen in eine an das jeweilige Dosierorgan 8 anschließende Förderleitung 9 eingerichtet. Die jeweilige Förderleitung 9 verbindet das Dosierorgan 8 dem sie zugeordnet ist über jeweils eine Materialeinleitschleuse 10 mit den Bodenbearbeitungswerkzeugen 6 eines der Säaggregate 4, so dass in jeder Reihe 7 im Boden jeweils ein sogenanntes Düngerband abgelegt wird. In einer nicht dargestellten Ausführungsform können den Säaggregaten 4 vorgelagerte Düngerschare zugeordnet sein, um das granulare Material separat abzulegen.

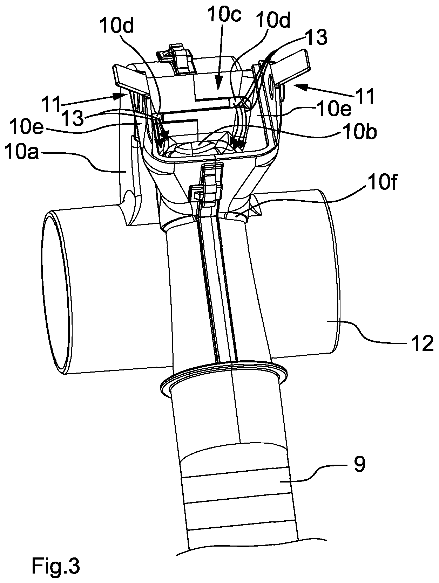

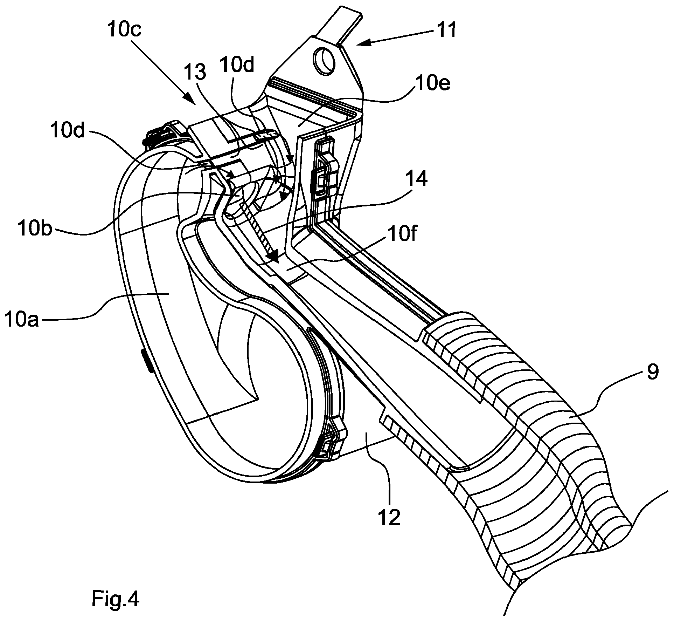

Die Materialeinleitschleuse 10 dient der pneumatischen Förderung des von dem jeweiligen Dosierorgan 8, an dem sie über als Schnappverschlüsse 11 ausgeführte Mittel zur lösbaren Befestigung angeordnet ist, abgegebenen Düngers in der jeweils an eine Materialeinleitschleuse 10 anschließenden Förderleitung 9. Hierzu ist der Materialeinleitschleuse 10 jeder Reihe 7 ein von einem nicht dargestellten Gebläse erzeugter pneumatischer Förderstrom über einen Lufteinlass 10a zuleitbar. Der Lufteinlass 10a schließt an ein Anschlussteil 12 an, welches dazu dient die jeweilige Materialeinleitschleuse 10 mit einer übergeordneten, sämtliche Materialeinleitschleusen 10 mit dem Gebläse verbindenden Luftleitung zu koppeln. Ferner umfasst die Materialeinleitschleuse 10 ein Materialförderelement 10b und ein Materialeinführelement 10c, wie Fig.3 und Fig.4 im Detail zeigen. Dem Materialförderelement 10b ist über den Lufteinlass 10a der von dem Gebläse erzeugte pneumatische Förderstrom zuleitbar. Durch die Anordnung des Materialeinführelementes 10c zwischen dem Materialförderelement 10b und der Förderleitung 9 wird über das Materialeinführelement 10c von dem Dosierorgan 8 zugebrachter Dünger durch den zumindest teilweise genutzten pneumatischen Förderstrom in der Förderleitung 9 gefördert.

Um dem Verstopfen der Materialeinleitschleuse 10 und der Belastung durch Verschmutzung im Allgemeinen entgegenzuwirken, umfasst das Materialeinführelement 10c ein mit dem Lufteinlass 10a verbundenes, durch zwei Segmentdüsen 10d gebildetes Spüldüsenelement. Über die Segmentdüsen 10d wird ein Teil des pneumatischen Förderstroms aus dem Lufteinlass 10a abgezweigt und strömt im Bereich der das Materialeinführelement 10c mit bildenden, gegenüberliegenden und aufrechten Seitenwände 10e ein. Die Segmentdüsen 10d erzeugen einen Luftfilm, angedeutet durch die durchgezogenen Pfeile 13, welcher sich durch die an die Seitenwände 10e anschließende Anordnung besonders gut an die Seitenwände 10e anlegt. Insgesamt wird das Materialeinführelement 10c durch den Luftfilm von innen ummantelt, das heißt die inneren Wandungen des Materialeinführelementes 10c werden von einer tragfähigen Luftschicht überströmt, so dass das durch die Segmentdüsen 10d gebildete Spüldüsenelement mittels des Luftfilms (vgl. Pfeile 13) dafür sorgt, dass zwischen dem zugebrachten Dünger und dem Materialeinführelement 10c verringerter Kontakt auftritt. Der so erzeugte Luftfilm bildet insofern eine pneumatische Trennschicht auf der die einrieselnden Düngerkörner zu Förderleitung 9 hin abgleiten.

Um zeitgleich die sichere Förderfunktion des Materialförderelementes 10b zu gewährleisten indem sichergestellt wird, dass ein ausreichender Anteil des pneumatischen Förderstroms durch das Materialförderelement 10b strömt, ist der summierte durchströmte Öffnungsquerschnitt der Segmentdüsen 10d, welche das Spüldüsenelement bilden, um etwa die Hälfte kleiner als der durchströmte Querschnitt des Materialförderelementes 10b. Der pneumatische Förderstrom teilt sich bei angenommenen gleichen mittleren Strömungsgeschwindigkeiten zumindest annährend im Verhältnis der Querschnittsflächen auf, so dass die Unterschreitung des zusammengenommenen durchströmten Öffnungsquerschnitts der Segmentdüsen 10d gegenüber dem durchströmten Öffnungsquerschnitt des Materialförderelementes 10b um die Hälfte bewirkt, dass etwa doppelt so viel Luft zur pneumatischen Förderung des Düngers in der Förderleitung 9 zur Verfügung steht als zur Ausbildung des Luftfilms.

Eine besonders vorteilhafte Ausprägung des Luftfilms wird erreicht indem die Segmentdüsen 10d eine quer zur Durchströmungsrichtung langgestreckte, rechteckige Form aufweisen. In der Folge bildet sich der Luftfilm als Flachstrahl aus, so dass eine besonders flächendeckende Beströmung des Materialeinführelementes 10c erreicht wird. Wie Fig.3 zeigt, sind die Segmentdüsen 10d zumindest annährend nebeneinander mit geringfügig unterschiedlichem Abstand zum Materialförderelement 10b im Materialeinführelement 10c angeordnet. Der angestrebte Effekt liegt hierbei ebenfalls darin, dass der Luftfilm sich möglichst flächendeckend ausbildet.

Wie durch die Schnittansicht der Materialeinleitschleuse 10 in Fig.4 deutlich wird, ist das Materialförderelement 10b als Treibdüse 10b ausgebildet und wandelt den über das Anschlussteil 12 und den Lufteinlass 10a zugebrachten pneumatischen Förderstrom in einen Förderstrahl 14. Der Förderstrahl 14 ist in Richtung der an die Materialeinleitschleuse 10 anschließenden Förderleitung 9 gerichtet und erzeugt im Materialeinführelement 10c so eine Saugwirkung in Richtung des Förderstrahls 14 auf Basis des Venturi-Effekts. Insofern kann bei der Materialeinleitschleuse 10 auch von einer Injektorvorrichtung 10 gesprochen werden. Da das Materialeinführelement 10c allerdings nicht luftdicht mit dem Dosierorgan 8 abschließt, wird so neben dem abgegebenen Dünger auch feuchte Umgebungsluft in Richtung der Förderleitung 9 mit eingesogen. Umso wichtiger ist die Wirkung des mittels durch die Segmentdüsen 10d gebildeten Spüldüsenelement erzeugten Luftfilms, erneut angedeutet durch die Pfeile 13, welcher den Kontakt zwischen den häufig hygroskopischen Düngern und dem Materialeinführelement 10c reduziert.

Zwischen der Förderleitung 9 und dem Materialeinführelement 10c umfasst die Materialeinleitschleuse 10 ferner einen Diffusorhals 10f. Der Diffusorhals 10f bildet in Strömungsrichtung zur Förderleitung 9 eine Querschnittsverjüngung, wodurch sich die Strömungsgeschwindigkeit erhöht und der Dünger somit in der Förderleitung 9 zusätzlich beschleunigt und die Saugwirkung im Materialeinführelement 10c erhöht wird.

### Bezugszeichenliste

- 1: Ackerschlepper
- 2: Einzelkornsämaschine
- F: Fahrtrichtung
- 3: Düngerbehälter
- 4: Säaggregat
- 5: Saatgutbehälter
- 6: Bodenbearbeitungswerkzeug
- 7: Reihe
- 8: Dosierorgan
- 8a: Dosierrad
- 9: Förderleitung
- 10: Materialeinleitschleuse
- 10a: Lufteinlass
- 10b: Materialförderelement
- 10c: Materialeinführelement
- 10d: Segmentdüse
- 10e: Seitenwand
- 10f: Diffusorhals
- 11: Schnappverschluss
- 12: Anschlussteil
- 13: Pfeil
- 14: Förderstrahl

## Patentansprüche

1. Materialeinleitschleuse (10) für eine Verteilmaschine (2), insbesondere eine Sämaschine, Einzelkornsämaschine (2) und/oder Düngerverteilmaschine, zur pneumatischen Förderung von granularem Material in einer sich der Materialeinleitschleuse (10) anschließenden Förderleitung () umfassend einen Lufteinlass (10a), ein Materialförderelement (10b) und ein Materialeinführelement (10c), wobei dem Materialförderelement (10b) über den Lufteinlass (10a) ein pneumatischer Förderstrom zuleitbar ist, wobei das Materialeinführelement (10c) zwischen dem Materialförderelement (10b) und der Förderleitung (9) angeordnet ist, so dass über das Materialeinführelement (10c) zubringbares granulares Material in der Förderleitung (9) durch den anhand des Materialförderelementes (10b) zugeleiteten pneumatischen Förderstromes in der Förderleitung (9) förderbar ist, **dadurch gekennzeichnet, dass** das Materialeinführelement (10c) zumindest ein mit dem Lufteinlass (10a) verbundenes Spüldüsenelement (10d), welches einen das Materialeinführelement (10c) von innen ummantelnden Luftfilm erzeugt, umfasst, dass das Spüldüsenelement (10d) mittels des Luftfilms dazu eingerichtet ist, den Kontakt zwischen granularem Material und Materialeinführelement (10c) zu reduzieren.

2. Materialeinleitschleuse (10) nach Anspruch 1, **dadurch gekennzeichnet, dass** der durchströmte Öffnungsquerschnitt des zumindest einen Spüldüsenelements (10d), den durchströmten Querschnitt des Materialförderelementes (10b), vorzugsweise um annährend die Hälfte, unterschreitet.

3. Materialeinleitschleuse (10) nach zumindest einem der vorstehenden Ansprüche, **dadurch gekennzeichnet, dass** der durchgeströmte Öffnungsquerschnitt des zumindest einen Spüldüsenelementes (10d) eine quer zur Durchströmungsrichtung lang gestreckte, insbesondere nahezu rechteckige, Form aufweist, so dass der Luftfilm als Flachstrahl ausgebildet ist.

4. Materialeinleitschleuse (10) nach zumindest einem der vorstehenden Ansprüche, **dadurch gekennzeichnet, dass** das Materialeinführelement (10c) zumindest zwei annährend aufrechte gegenüberliegende Seitenwände (10e) umfasst, dass das zumindest eine Spüldüsenelement (10d) sich zwischen den zumindest zwei Seitenwänden (10e) erstreckt und an diese nahezu anschließt, so dass sich der Luftfilm an die Seitenwände (10e) anlegt.

5. Materialeinleitschleuse (10) nach zumindest einem der vorstehenden Ansprüche, **dadurch gekennzeichnet, dass** das zumindest eine Spüldüsenelement (10d) gebildet ist durch zumindest zwei Segmentdüsen (10d).

6. Materialeinleitschleuse (10) nach Anspruch 5, **dadurch gekennzeichnet, dass** die zumindest zwei Segmentdüsen (10d) zumindest annährend nebeneinander angeordnet sind.

7. Materialeinleitschleuse (10) nach Anspruch 5 oder 6, **dadurch gekennzeichnet, dass** die zumindest zwei Segmentdüsen (10d) in unterschiedlichem Abstand zum Materialförderelement (10b) angeordnet sind.

8. Materialeinleitschleuse (10) nach zumindest einem der vorstehenden Ansprüche, **dadurch gekennzeichnet, dass** die Materialeinleitschleuse (10) als Injektorvorrichtung (10) ausgeführt ist, dass das Materialförderelement (10b) als Treibdüse (10b), welche den pneumatischen Förderstrom in einen zumindest annährend in die Förderleitung (9) gerichteten Förderstrahl (14) wandelt und so eine Saugwirkung in dem Materialeinführelement (10c) erzeugt, ausgebildet ist.

9. Materialeinleitschleuse (10) nach zumindest einem der vorstehenden Ansprüche, **dadurch gekennzeichnet, dass** die Materialeinleitschleuse (10) einen Diffusorhals (10f) umfasst, dass der Diffusorhals (10f) zwischen Materialeinführelement (10c) und der Förderleitung (9) angeordnet ist, so dass das granulare Material in der Förderleitung (9) zusätzlich beschleunigt wird.

10. Verteilmaschine (2) umfassend einen, vorzugsweise lang gestreckten, Vorratsbehälter (3) für granulares Material und quer zur Fahrtrichtung (F) nebeneinander angeordnete Bodenbearbeitungswerkzeuge (6) zur Ablage von granularem Material in mehreren Reihen (7), wobei dem Vorratsbehälter (3) für jede Reihe (7) zumindest ein Dosierorgan (8) zur Abgabe von granularem Material in geregelten Mengen in eine das zumindest eine Dosierorgan (8) mit den Bodenbearbeitungswerkzeugen (6) Schüttgut leitend verbindende Förderleitung (9) zugeordnet ist und zwischen dem Dosierorgan (8) und der Förderleitung (9) jeder Reihe (7) eine Materialeinleitschleuse (10) zur pneumatischen Förderung des granularen Materials in der Förderleitung (9) angeordnet ist, wobei der Materialeinleitschleuse (10) jeder Reihe (7) ein von einem Gebläse erzeugter pneumatischer Förderstrom zumindest teilweise zuleitbar ist, **dadurch gekennzeichnet, dass** die Materialeinleitschleuse (10) nach zumindest einem der Ansprüche 1 bis 9 ausgebildet sind.

## Claims

1. Material feed lock (10) for a distributing machine (2), in particular a seed drill, single-grain seed drill (2) and/or fertilizer distributing machine, for pneumatically conveying granular material in a conveying line () adjoining the material feed lock (10), the material feed lock comprising an air inlet (10a), a material conveying element (10b) and a material introduction element (10c), it being possible for a pneumatic conveying flow to be supplied to the material conveying element (10b) via the air inlet (10a), the material introduction element (10c) being arranged between the material conveying element (10b) and the conveying line (9) such that granular material in the conveying line (9), which material can be loaded via the material introduction element (10c), can be conveyed in the conveying line (9) by means of the pneumatic conveying flow supplied by the material conveying element (10b), **characterized in that** the material introduction element (10c) comprises at least one flushing nozzle element (10d) connected to the air inlet (10a), which flushing nozzle element generates an air film enclosing the material introduction element (10c) from the inside, that, by means of the air film, the flushing nozzle element (10d) is configured to reduce contact between the granular material and the material introduction element (10c).

2. Material feed lock (10) according to claim 1, **characterized in that** the opening cross section, through which flow passes, of the at least one flushing nozzle element (10d) is smaller than the cross section, through which flow passes, of the material conveying element (10b), preferably by approximately half.

3. Material feed lock (10) according to at least one of the preceding claims, **characterized in that** the opening cross section, through which flow passes, of the at least one flushing nozzle element (10d) has a shape which is elongated, in particular is almost rectangular, transversely to the through-flow direction such that the air film is in the form of a flat jet.

4. Material feed lock (10) according to at least one of the preceding claims, **characterized in that** the material introduction element (10c) comprises at least two approximately upright oppositely located side walls (10e), that the at least one flushing nozzle element (10d) extends between the at least two side walls (10e) and almost adjoins them such that the air film abuts the side walls (10e).

5. Material feed lock (10) according to at least one of the preceding claims, **characterized in that** the at least one flushing nozzle element (10d) is formed by at least two segment nozzles (10d).

6. Material feed lock (10) according to claim 5, **characterized in that** the at least two segment nozzles (10d) are arranged at least approximately next to one another.

7. Material feed lock (10) according to claim 5 or 6, **characterized in that** the at least two segment nozzles (10d) are arranged at different distances from the material conveying element (10b).

8. Material feed lock (10) according to at least one of the preceding claims, **characterized in that** the material feed lock (10) is designed as an injector device (10), that the material conveying element (10b) is designed as a drive nozzle (10b) which converts the pneumatic conveying flow into a conveying jet (14) directed at least approximately into the conveying line (9) and thus generates a suction effect in the material introduction element (10c).

9. Material feed lock (10) according to at least one of the preceding claims, **characterized in that** the material feed lock (10) comprises a diffuser neck (10f), that the diffuser neck (10f) is arranged between the material introduction element (10c) and the conveying line (9) such that the granular material in the conveying line (9) is additionally accelerated.

10. Distributing machine (2) comprising a preferably elongated storage container (3) for granular material and soil cultivation tools (6) arranged next to one another transversely to the direction of travel (F) for depositing granular material in a plurality of rows (7), at least one metering member (8) being assigned to the storage container (3) for each row (7) for depositing granular material in regulated amounts into a conveying line (9) connecting the at least one metering member (8) to the soil cultivation tools (6), and a material feed lock (10) for pneumatically conveying the granular material in the conveying line (9) being arranged between the metering member (8) and the conveying line (9) of each row (7), it being possible for a pneumatic conveying flow generated by a fan to be at least partially supplied to the material feed lock (10) of each row (7), **characterized in that** the material feed lock (10) is designed according to at least one of claims 1 to 9.

## Revendications

1. Sas d'introduction de matière (10) pour un épandeur (2), en particulier un semoir, un semoir monograine (2) et/ou un épandeur d'engrais, pour le transport pneumatique de matière granulaire dans une conduite de transport () raccordée au sas d'introduction de matière (10), comprenant une entrée d'air (10a), un élément de transport de matière (10b) et un élément d'introduction de matière (10c), l'élément de transport de matière (10b) pouvant être alimenté en courant de transport pneumatique par l'intermédiaire de l'entrée d'air (10a), l'élément d'introduction de matière (10c) étant agencé entre l'élément de transport de matière (10b) et la conduite de transport (9) de telle sorte que de la matière granulaire pouvant être acheminée par l'intermédiaire de l'élément d'introduction de matière (10c) peut être transportée dans la conduite de transport (9) par le courant de transport pneumatique amené à l'aide de l'élément de transport de matière (10b) dans la conduite de transport (9), **caractérisé en ce que** l'élément d'introduction de matière (10c) comprend au moins un élément de buse de rinçage (10d) relié à l'entrée d'air (10a), lequel élément génère un film d'air entourant l'intérieur de l'élément d'introduction de matière (10c), **en ce que** l'élément de buse de rinçage (10d) est conçu pour réduire, au moyen du film d'air, le contact entre la matière granulaire et l'élément d'introduction de matière (10c).

2. Sas d'introduction de matière (10) selon la revendication 1,
**caractérisé en ce que** la section transversale d'ouverture traversée par le courant dudit au moins un élément de buse de rinçage (10d) est inférieure, de préférence d'approximativement la moitié, à la section transversale traversée par le courant de l'élément de transport de matière (10b).

3. Sas d'introduction de matière (10) selon au moins l'une quelconque des revendications précédentes, **caractérisé en ce que** la section transversale d'ouverture traversée par le courant dudit au moins un élément de buse de rinçage (10d) présente une forme allongée, en particulier quasiment rectangulaire, transversalement par rapport à la direction d'écoulement, de telle sorte que le film d'air est conçu sous forme de jet plat.

4. Sas d'introduction de matière (10) selon au moins l'une quelconque des revendications précédentes, **caractérisé en ce que** l'élément d'introduction de matière (10c) comprend au moins deux parois latérales (10e) opposées quasiment verticales, **en ce que** ledit au moins un élément de buse de rinçage (10d) s'étend entre lesdites au moins deux parois latérales (10e) et se joint approximativement à celles-ci, de telle sorte que le film d'air s'applique contre les parois latérales (10e).

5. Sas d'introduction de matière (10) selon au moins l'une quelconque des revendications précédentes, **caractérisé en ce que** ledit au moins un élément de buse de rinçage (10d) est formé par au moins deux buses segmentées (10d).

6. Sas d'introduction de matière (10) selon la revendication 5,
**caractérisé en ce que** lesdites au moins deux buses segmentées (10d) sont agencées au moins approximativement l'une à côté de l'autre.

7. Sas d'introduction de matière (10) selon la revendication 5 ou 6,
**caractérisé en ce que** lesdites au moins deux buses segmentées (10d) sont agencées à une distance différente de l'élément de transport de matière (10b).

8. Sas d'introduction de matière (10) selon au moins l'une quelconque des revendications précédentes, **caractérisé en ce que** le sas d'introduction de matière (10) est conçu en tant que dispositif d'injection (10), **en ce que** l'élément de transport de matière (10b) est conçu en tant que buse de propulsion (10b), qui transforme le courant de transport pneumatique en un jet de transport (14) orienté au moins approximativement dans la conduite de transport (9) et génère ainsi un effet d'aspiration dans l'élément d'introduction de matière (10c).

9. Sas d'introduction de matière (10) selon au moins l'une quelconque des revendications précédentes, **caractérisé en ce que** le sas d'introduction de matière (10) comprend un col de diffusion (10f), **en ce que** le col de diffusion (10f) est agencé entre l'élément d'introduction de matière (10c) et la conduite de transport (9), de telle sorte que la matière granulaire est en outre accélérée dans la conduite de transport (9).

10. Épandeur (2) comprenant un réservoir (3) de préférence allongé pour une matière granulaire et des outils de travail du sol (6) agencés les uns à côté des autres, transversalement par rapport à la direction de transport (F), pour le dépôt de matière granulaire en plusieurs rangées (7), au moins un organe de dosage (8), destiné au dépôt de matière granulaire en des quantités régulées dans une conduite de transport (9) reliant ledit au moins un organe de dosage (8) aux outils de travail du sol (6) de manière à guider de la matière en vrac, étant associé au réservoir (3) pour chaque rangée (7) et un sas d'introduction de matière (10), destiné au transport pneumatique de la matière granulaire dans la conduite de transport (9), étant agencé entre l'organe de dosage (8) et la conduite de transport (9) de chaque rangée (7), le sas d'introduction de matière (10) de chaque rangée (7) pouvant au moins en partie être alimenté en courant de transport pneumatique généré par un ventilateur, **caractérisé en ce que** le sas d'introduction de matière (10) est conçu selon au moins l'une quelconque des revendications 1 à 9.
